Europäisches Patentamt

European Patent Office

Office européen des brevets

(11) Publication number: **0 370 663**
**A2**

# EUROPEAN PATENT APPLICATION

(21) Application number: 89311692.1

(22) Date of filing: 10.11.89

(51) Int. Cl.⁵: **G02B 6/32, G02B 6/42**

(30) Priority: 22.11.88 GB 8827242

(43) Date of publication of application:
**30.05.90 Bulletin 90/22**

(84) Designated Contracting States:
**AT BE CH DE ES FR GB GR IT LI LU NL SE**

(71) Applicant: **PLESSEY OVERSEAS LIMITED
Vicarage Lane
Ilford Essex IG1 4AQ(GB)**

(72) Inventor: **Randle, Frederick Arthur
11 Willows Hill Bradden
Towcester Northamptonshire, NN12 8EJ(GB)**

(74) Representative: **Lupton, Frederick
The Plessey Company plc Intellectual
Property Dept. Vicarage Lane
Ilford, Essex IG1 4AQ(GB)**

(54) **Optical coupling of optical fibres and optical devices.**

(57) Coupling of light from monomode fibres or devices to other fibres or devices is achieved simply and without micromanipulation by the alignment of the outer diameters of optical elements which have common diameters. Lensing is achieved by using a section of multimode fibre to act as a graded index lens. Alignment of devices to the common optical axis can be achieved by an assembly techniques such as that described in "Alignment of Fibre Arrays" Patent File No. F20389D.

EP 0 370 663 A2

# OPTICAL COUPLING OF OPTICAL FIBRES AND OPTICAL DEVICES

This invention relates to the optical coupling of a first light transmitting, receiving or conducting device such as an optical fibre to a second such device, for example an integrated optical device.

A common problem which arises in integrated optical devices is the alignment of an end of an optical fibre with for example a laser diode or photodetector integrated on the device, in the situation where it is desired to collimate the light emerging from the end of the optical fibre prior to the light falling onto a photodetector, for example. Previously it has been necessary to use a relatively large diameter lens as compared with the diameter of the optical fibre (normally 125 microns) to collimate the light from the fibre. This creates problems in the mounting of the fibre and lens on a substrate and it has previously been necessary to use an accurately defined multilevel optical bench formed on a substrate or alternatively a manipulation and fix technique which required a skilled human operator.

The present invention starts from the recognition that optical fibres in common use are single mode transmission fibres comprising an inner core 8 microns in diameter along which light is transmitted surrounded by an outer glass layer, to make a total diameter of 125 microns. Another type of optical fibre in common use is multimode fibre which comprises a glass core 125 microns in diameter of graded index material by which is meant material which gradually changes it refractive index in a radial direction. Light is transmitted along such material in a variety of transmissions modes and it is a property of such material that it tends to collimate light propagated along it. It is therefore possible to interpose a section of multimode fibre between the end of a single mode fibre and another optical device whereby the multimode fibre will act as a collimating lens. A particular advantage of such an arrangement is ease of physical alignment of the fibres, since it is common to seat the end of an optical fibre in a V-shaped groove etched in the surface of a chip substrate. It is therefore simply possible to align the multimode fibre section with the end of the single mode optical fibre.

The present invention accordingly provides a light collimating optical system, the system comprising first · and second light transmitting/receiving/conducting devices, a section of optical fibre having a refractive index which changes gradually in a radial direction, first and second light conducting means positioned adjacent to the optical fibre section and having a diameter common with that of the optical fibre section and serving to conduct light between the first and second light transmitting/receiving/conducting devices via the optical fibre section, and monitoring means serving to hold the optical fibre section and said first and second light conducting means in a common optical axis.

Present techniques which use graded index lenses necessarily involve special provisions for the relatively large diameter of the lens. Alignment of the optical axis of the lens to a fibre or optical device requires either a very accurate multi-level optical bench or a manipulation and fix technique.

The present invention overcomes these problems by using a section of multimode fibre to act as a graded index lens. This lens can then have the same diameter as the fibre which allows alignment of the optical axis to be accomplished by simply aligning the outer diameters.

In order to maintain the correct spacing of the fibre to the lens and the lens to the device, spacers may be used. These can again be made of optical fibre with the same outer diameter as the lens and fibre but the cores must be larger than that of the multimode fibre and of uniform refractive index. Totally undoped fibre or large core diameter step index fibre are also suitable.

Embodiments of the invention will now be described with reference to the accompanying drawings wherein:-

Figure 1 illustrates coupling schemes using the invention.

Figure 2 illustrates how a multiple pitch lens can be used to achieve coupling between a device and a fibre.

Figure 3-6 are perspective views of further optical coupling schemes assembled in accordance with the invention; and

Figures 7 illustrates a method of coupling an integrated optical device to a substrate.

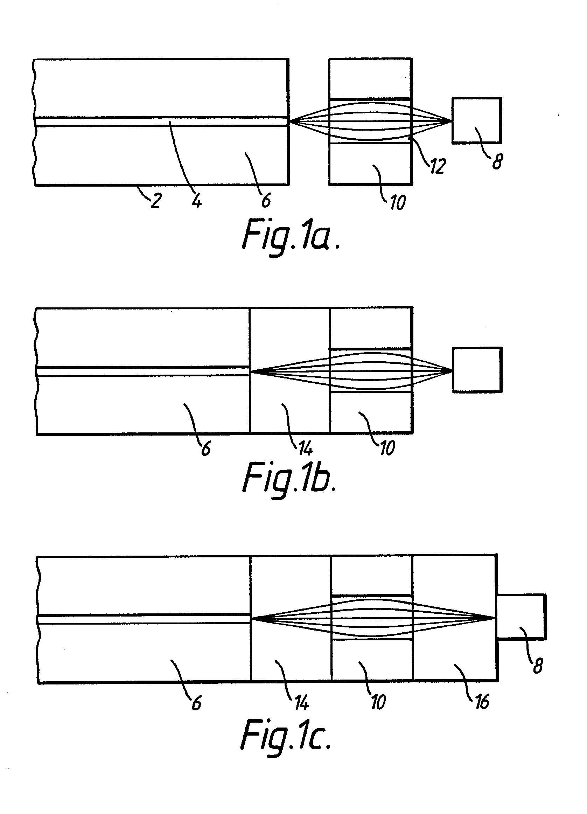

Referring to the drawings, Figure 1a shows a first light transmitting/receiving/conducting device comprising a monomode optical fibre 2 having a central core 4, 8 microns in diameter, surrounded by an outer glass layer 6, the total diameter being 125 microns. A second light transmitting/receiving/conducting device comprises a photodetector 8 which is mounted coaxially with fibre 2, with a further fibre section 10 disposed therebetween. Fibre section 10 comprises a multimode having a core region 12 formed of a graded refractive index material which acts to collimate and focus the light from fibre 2 onto photodetector 8. Fibre section 10 is positioned so that the photodetector 8 is at the correct focal point and means (not shown) to provide therefore holding the various components in position.

Figure 1b shows a modified arrangement wherein a spacing element 14 is positioned between fibre section 10 and fibre 6 so as securely to define the spacing between the two elements. The spacing element 14 comprises a section of optical fibre having a constant defractive index.

In the arrangement of Figure 1c, a further spacing element 16 is provided between photodetector 8 and lens 10 in order to securely define spacing between photodetector 8 and lens 10. Spacing element 16 comprises a section of optical fibre of constant refractive index.

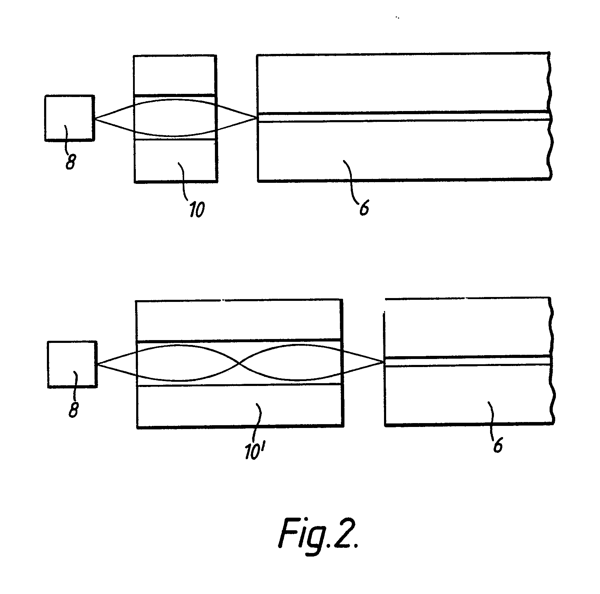

Referring to Figure 2, where similar parts are denoted by similar reference numerals, the length of lens section 10 is dependent on the refractive index profile of the lens and the pitch requirements. Typically the lengths of multimode fibre required are small and so in order to achieve a more practical length the fibre may be increased in multiples of half pitch as shown in Figure 2, lens section 10 prime being considerably greater in length than lens section 10 since the light rays are focussed to a central point within the lens and then they verge from the focal point and are refocussed at the photodetector 8.

Alignment of the outer diameters can be achieved by non manipulative processes such as a common tube or V groove channel. The tube may have a precisely defined bore to just accommodate the lens and fibre or, more simply, be either a C spring tube or a "contracted on" tube, the latter being more feasible using memory metal. A suitable V groove may be milled out of metal or chemically etched into a suitable material such as silicon. If silicon or similar material is used an optical device could be made to self align with the fibre lens system by means of solder bumps as described in Patent. File No. F20389D "Alignment of Fibre Arrays", pending application no. 8719557.

By use of this invention therefore a fibre may be simply aligned to a lens element and at a set distance from it. A suitable microbench containing a channel and platform allows a fibre/spacer/lens/spacer/device assembly to be put together with minimal micromanipulation of the device. The technique also allows two fibres to be coupled together with similar ease using a tube system or V groove.

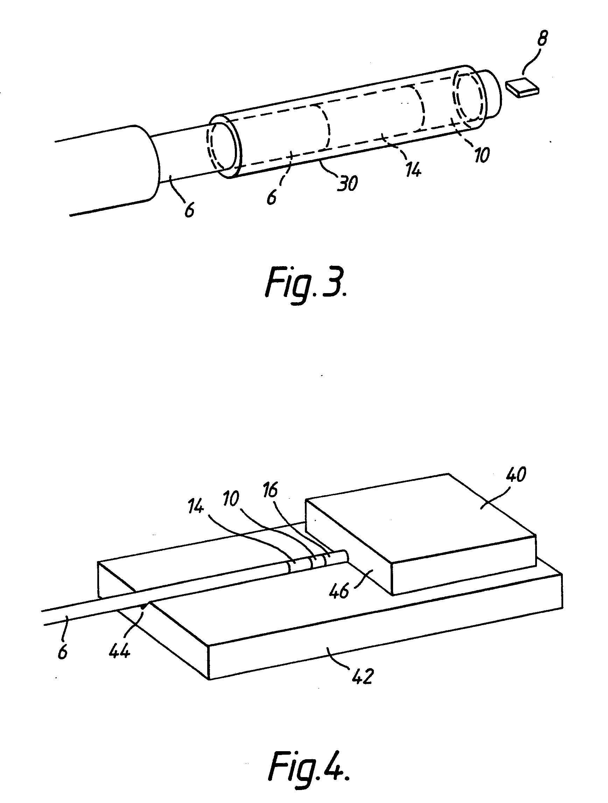

Figure 3 shows how a section of multimode fibre 10 and a spacer 14 can be aligned to a monomode fibre 6 by means of a close fitting tube 30. Such an arrangement can be achieved by using a tube of precise bore or by longitudinal crimping of a thin walled tube. Reducing the diameter of a slightly oversize tube by heating and then cooling or by the use of memory metal will also align the components. C-spring tubes of correct diameter can also be used. Such an assembly constitutes a lensed fibre which may then be used to couple light from a device 6 into the fibre as shown.

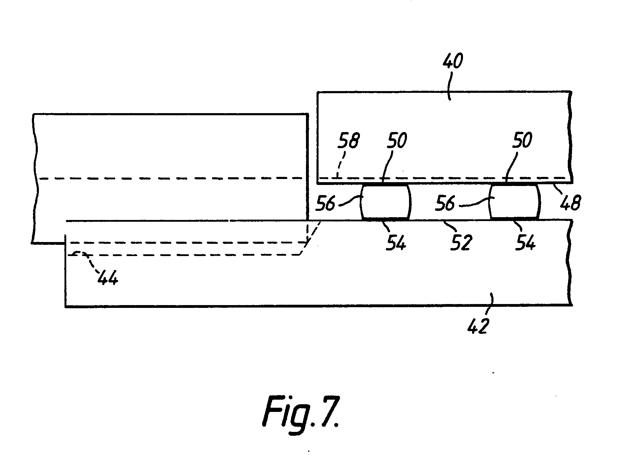

Figure 4 shows how, by the use of two spacers 14, 16, and a suitable device assembly technique complete alignment of an integrated optical device 40 device to a fibre core 6 can be achieved with no micromanipulation of any of the components. Integrated optical device 40 is mounted on a semiconductor substrate 42 by means of an array of solder bumps (not shown) and which will be described below with reference to Figures 6 and 7. Substrate 42 has a V-groove 44 etched in its upper surface in which is located fibre 6 together with spacer elements 14, 16 and lens fibre section 10. These elements may be secured in V-groove 44 by an adhesive bond or by solder in order to precisely align the elements coaxially with a light transmitting/conducting/receiving device mounted on the side face 46 of optical device 40.

Referring now to Figure 7 this shows how optical device 40 is mounted on substrate 42. This method is more particularly described in our copending application no. 8820196.7. In this method the lower face 48 of device 40 has an array of solder pads 50 formed thereon, and the upper face of substrate 42 has a registering array of solder pads 54 formed thereon. Controlled amounts of solder 56 are formed between the pads of the two pad arrays and by precisely determining the dimensions of the solder drops 56, the device 40 is not only located in the horizontal plane of this substrate surface, but is also precisely located in a height dimension relative to the substrate surface. Thus an optical device 58, as shown a waveguide, may be precisely located relative to the axis of the fibre elements located in the V-groove 44.

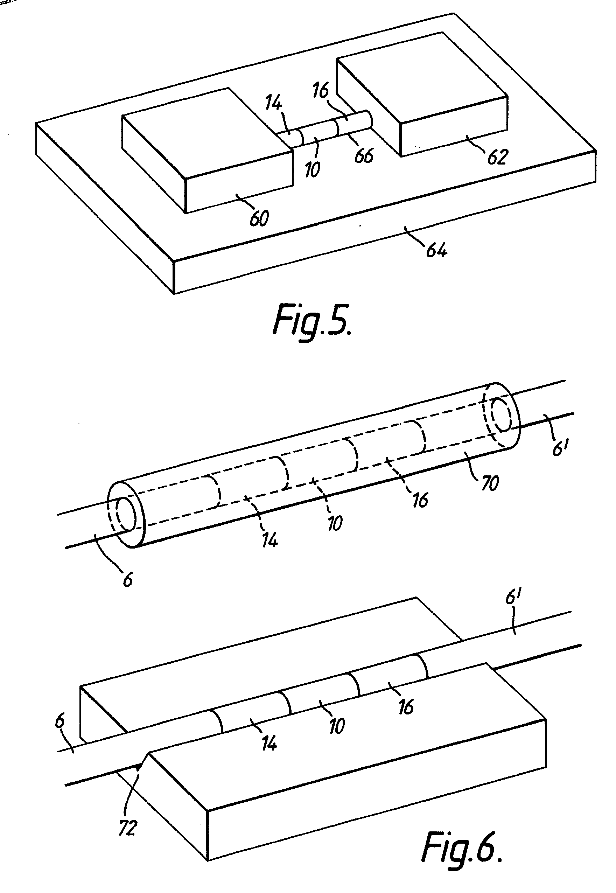

Referring to Figure 5, this indicates how two separate integrate optical devices 60, 62 each mounted on substrate 64 by the method described with reference to Figures 7 and 8 are light/coupled by a fibre lens element 10 and two spacer elements 14, 16 disposed between the two optical devices and mounted a V-shaped groove 66 etched in the surface of substrate 64.

In Figure 6, two lengths of monomode fibre 6, 6 prime forming the first and second light transmitting/receiving/conducting devices are interconnected with spacing elements 14, 16 and a central collimating fibre lens section 10. In one arrangement, the fibres 6, 6 prime and interconnecting elements are held within a metallic tube 70 which may be creeped in position, may be heat shrunk in position, or as preferred may be formed of a metal known as a memory metal which is normally held at liquid nitrogen temperatures and which when positioned on the fibre array and allowed to revert to room temperature shrinks onto the fibre array to hold the array in position. In an alternative arrangement as shown in Figure 6, the fibre lens array is mounted in a V-groove 72 etched in the surface of a silicon substrate 74.

**Claims**

1. A light collimating optical system, the system comprising first and second light transmitting/receiving/conducting devices, a section of optical fibre having a refractive index which changes gradually in a radial direction, first and second light conducting means positioned adjacent to the optical fibre section and having a diameter common with that of the optical fibre section and serving to conduct light between the first and second light transmitting/receiving/conducting devices via the optical fibre section, and mounting means serving to hold the optical fibre section and said first and second light conducting means in a common optical axis.

2. A system as claimed in claim 1, wherein the first and second light conducting means comprising spacing elements.

3. A system as claimed in claim 2, wherein the spacing elements comprise optical fibre sections.

4. A system as claimed in any preceding claim, wherein said first and/or said second light transmitting/receiving/conducting device comprises an optical fibre and constitutes said first and/or said second light conducting means respectively.

5. A system as claimed in any preceding claim wherein said mounting means comprises a hollow tubular member firmly gripping said first and second light conducting means and the section of optical fibre therewithin.

6. A system as claimed in any of claims 1 to 5 wherein said mounting means comprises a substrate having a surface in which is formed a V-groove, and the optical fibre section and first and second light conducting means are seated in said V-groove.

7. A system as claimed in claim 6 wherein said first and/or said second light transmitting/receiving/conducting devices are respectively comprised in first and/or second integrated optical devices mounted on said substrate surface.

8. A system as claimed in claim 7 wherein the or each integrated optical device is mounted on the substrate by a technique involving soldering an array of solder pads on the substrate surface to an array of solder pads on the adjacent surface of the integrated optical device, and controlling the amount of solder forming a solder drop interconnecting registering solder pads whereby to align the integrated optical device in the plane of the substrate and in a height dimension normal to the plane of the substrate.

9. Light collimating systems as claimed in claim 1 and substantially as described with reference to the accompanying drawings.

Fig.1a.

Fig.1b.

Fig.1c.

Fig.2.

Fig.3.

Fig.4.

**Fig.5.**

60 14 16 62 10 66 64

**Fig.6.**

6 14 10 16 70 6'

6 14 10 16 6'
72

**Fig.7.**